# FASCICULE DE BREVET EUROPEEN

(11) **EP 2 173 223 B1**
(45) Date de publication et mention de la délivrance du brevet: **22.04.2015**
(21) Numéro de dépôt: 08829906.0
(22) Date de dépôt: 16.07.2008
(51) Int. Cl.: A47J 27/022, A47J 36/02

(54) **ARTICLE CULINAIRE A FENTES ALLONGEES ANTI -DEFORMAT I ON**
KOCHVORRICHTUNG MIT ERWEITERTEN ANTIVERFORMUNGSSCHLITZEN
COOKING UTENSIL WITH EXTENDED ANTI -DEFORMATION SLOTS

(30) Priorité: 01.08.2007 FR 0705641
(43) Date de publication de la demande: 14.04.2010
(73) Titulaire: SEB S.A., 69130 Ecully (FR)
(72) Inventeur: BONNEL, Jocelyn, F-73100 Vions (FR); CUILLERY, Pascal, F-74210 Faverges (FR)
(74) Mandataire: Novagraaf Technologies
(86) Numéro de dépôt international: PCT/FR2008/001049
(87) Numéro de publication internationale: WO 2009/030838

(56) Documents cités:
- EP-A- 1 053 711
- FR-A- 2 693 093
- FR-A- 2 801 485

## Description

L'invention concerne un article culinaire comprenant un fond doublé, par-dessous, par un insert en un matériau dur, des ouvertures traversant ledit insert en particulier pour sa fixation avec le fond.

WO 2006/126848 présente un tel article culinaire. Ici, le fond appartient à une calotte en aluminium. FR-A-2693093 est un autre exemple qui divulgue un article culinaire où certaines au moins desdites ouvertures se présentent comme des fentes allongées définissant individuellement, sur leur longueur, une forme globalement d'arche.

Des progrès sont toutefois encore à réaliser, en particulier en relation avec les problèmes suivants :
- résistance à la déformation du fond lors de la fabrication de l'article, et de façon encore plus importante, dans le temps,
- couplage entre l'intensité de la puissance de chauffe auquel est soumis l'article lors de son utilisation et sa capacité à être chauffé par induction de manière performante, dès lors que l'on aura utilisé des matériaux compatibles avec ce type de chauffage,
- accrochage de l'insert en matériau plus dur avec au moins une partie en matériau plus mou du fond.

Le compromis suivant est en particulier visé:
- diminuer la surface de l'insert en matériau dur, via les ouvertures qui y sont pratiquées,
- préserver une surface d'insert appropriée pour assurer une compatibilité de l'article avec les systèmes de chauffage par induction existants.

L'article culinaire selon l'invention est défini dans la revendication 1.

Pour satisfaire tout ou partie des buts et compromis évoqués ci-dessus, il est d'abord proposé que certaines au moins des ouvertures précitées (définies par les fentes en forme globalement d'arche) présentent des portions extrêmes opposées allongées en direction toutes soit du centre de l'insert, soit de la périphérie extérieure de cet insert.

Ceci concourt à une bonne tenue mécanique et, pour la diminution de surface de l'insert, d'autres choix sont préférés comme des trous additionnels, qui sont plus efficaces en termes de performance de chauffage par induction.

Ainsi, on conseille de ne pas prévoir (uniquement) des ouvertures en forme de secteurs angulaires et/ou de fentes radiales, comme dans FR2693093, ni de fentes ramifiées, à la manière des fentes telles que 14b dans WO 2006/126848 dont le nombre d'extrémités libres est supérieur à deux.

En outre, par comparaison avec ce dernier document, on conseille que les fentes soient à contour fermé, celles (14a) de ce document débouchant soit en périphérie extérieure, soit sur un large orifice central. Un contour fermé améliore la tenue mécanique.

Pour une fixation performante de l'insert rapporté, on conseille que le fond précité inclue un premier matériau plus mou que celui de cet insert, les ouvertures, y compris lesdites fentes allongées, qui le traversent étant remplies par ce premier matériau assez mou, tel de l'aluminium.

Compte tenu de différentes techniques de fabrication envisageables, on conseille par ailleurs, en particulier:
- soit que ledit fond appartienne à une calotte réalisée au moins essentiellement dans un/ledit premier matériau plus mou que celui de l'insert et que cet insert soit, par ces ouvertures traversantes (y compris les fentes allongées), encastré dans ledit premier matériau,
- soit que ce fond comprenne une couche dans un/ledit matériau plus mou que celui de l'insert, cette couche étant interposée entre :
   * l'insert qui est, comme ci-dessus, encastré dans ce premier matériau,
   * et une paroi de fond d'une calotte en un autre matériau plus dur que celui de ladite couche, tel de l'inox.

D'autres caractéristiques liées au présent sujet et à des réalisations pratiques de celui-ci suivent, en relation avec des dessins donnés à titre d'exemples non limitatifs et où:
- la figure 1 est une vue schématique d'un article culinaire, essentiellement en coupe verticale, selon la ligne de coupe I-I de la figure 3,
- la figure 2 correspond au détail II fig. 1,
- la figure 3 est une vue du fond de l'article de la figure 1, dans le sens de la flèche III, complétée par symétrie,
- les groupes de figures 4, 5, 6 et 7, 8, 9 montrent d'autres réalisations suivant les mêmes illustrations que les figs. 1-3,
- et les figures 10,11,12,13 sont des vues schématiques, chacune d'un insert selon la même vue que celle des figs. 3, 6, 9, avec à chaque fois une alternative de réalisation. Les petits remplissages de matière plus malléable qui étaient montrés figs.3,6,9 ne sont plus systématiquement représentés. Leur présence est au demeurant non impérative, encore que conseillée (voir fig. 13). Ceux à l'endroit ou à proximité immédiate du centre du fond peuvent être remplacés par un remplissage unique de plus grand diamètre, comme illustré sur les figures 10,12 et 13, à titre d'exemple.

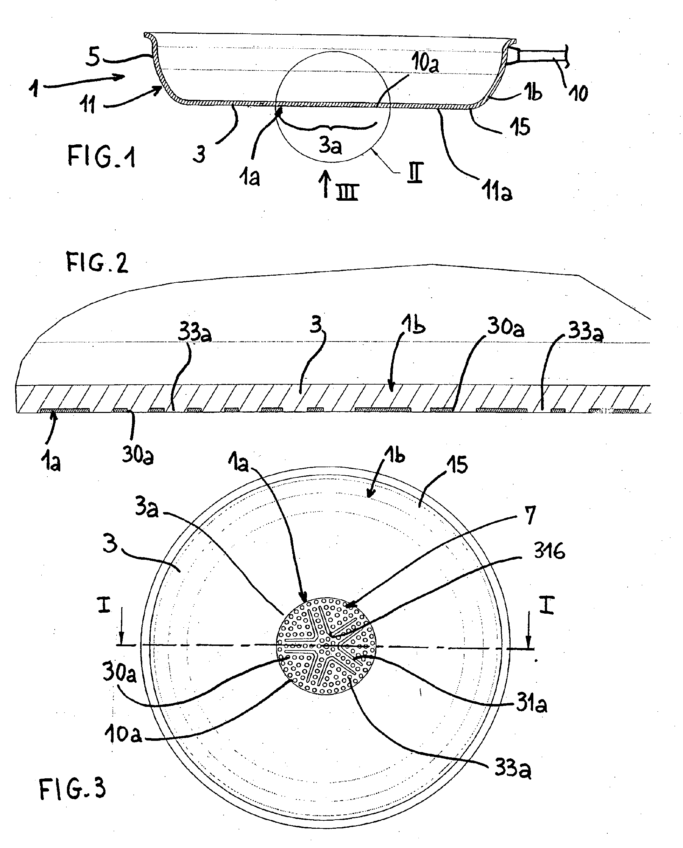

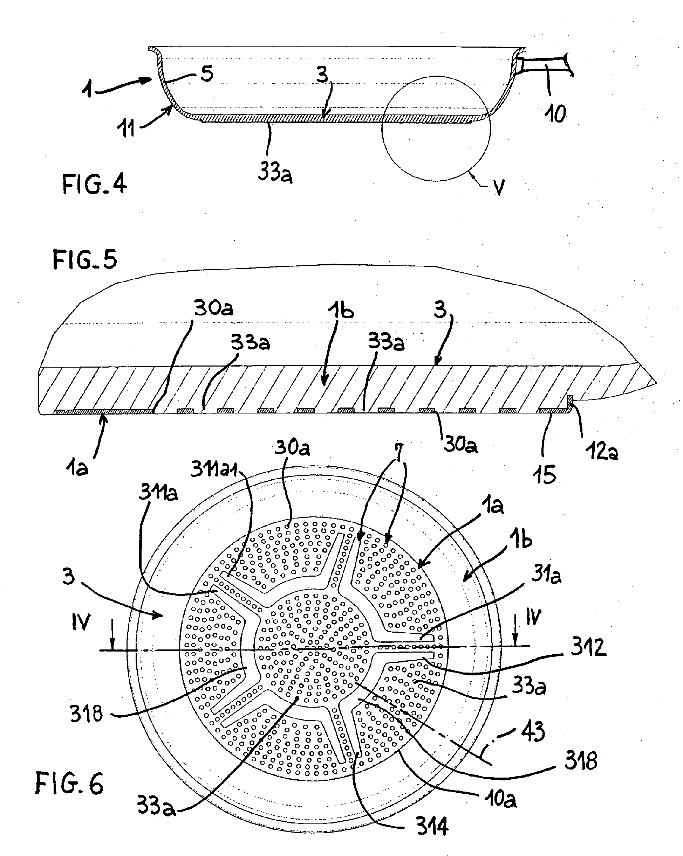

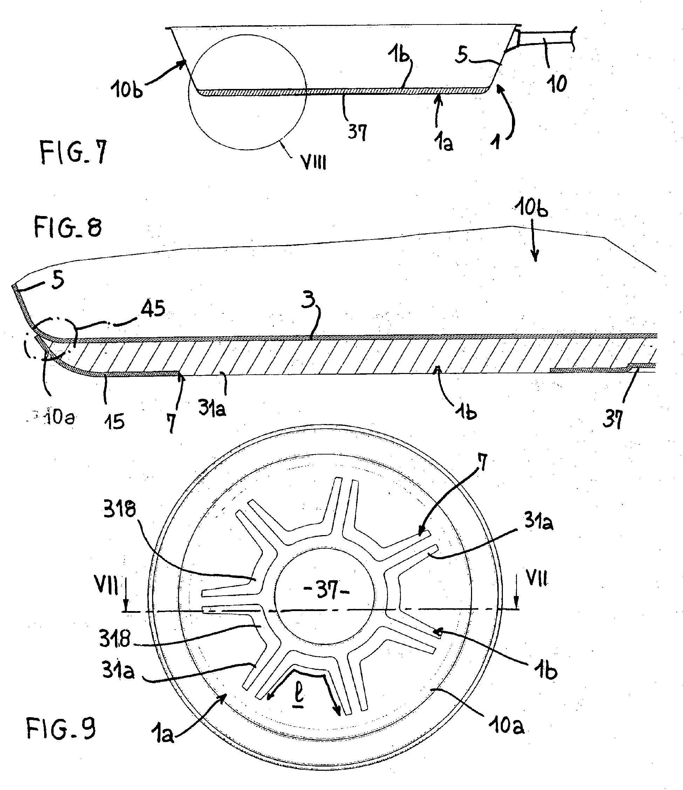

Dans la présente description, on appelle « article culinaire » tout article de cuisine comprenant, typiquement, au moins une poignée 10 et une calotte (creuse) 10b (fig. 7) ou 11 (figs. 1,4) recevant le produit ou la préparation à chauffer ou cuire. Le fond de la calotte est une partie sensible, puisque la plus soumise à la chaleur d'une source adaptée. Les poêles, casseroles... sont ainsi concernées.

Sur les figures, l'article culinaire, toujours repéré 1, comprend une partie en matériau dur la, ici un métal, venant s'insérer, sous l'article, dans une partie en matériau plus mou 1b ici également un métal. Les deux parties sont assemblées pour constituer un fond renforcé performant.

La partie ou grille 1a est ici en matériau ferromagnétique compatible avec un chauffage par induction de l'article. Elle peut être en acier inoxydable. La partie 1b est, au moins à l'endroit du fond 3 en un matériau bon diffuseur de chaleur. L'aluminium convient.

Figs. 1 à. 6, cette partie 1b est de préférence monobloc, comme illustré, et présente donc une paroi transversale de fond 3 d'où s'élève une paroi latérale 5. Elle présente une forme de calotte creuse. La poignée est fixée à elle.

Une partie au moins de sa paroi de fond est ainsi doublée par-dessous par la partie en métal dur, 1a, qui se présente comme un insert de fond qui peut avoir été perforé ou découpé, localement.

On doit comprendre que l'illustration du fond d'article tel figure 1 n'est en réalité pas à face inférieure 11a plane, mais incurvée ou formée en creux, avec une convexité vers le haut, pour assurer une position en contrebas à une zone de portée périphérique 15 de fond.

En outre, d'origine, l'insert 1a peut en particulier être en forme de plaque, comme fig. 1, ou plutôt en capsule, avec alors un bord périphérique 12a relevé, comme fig. 5. Dans le cas de la fig. 7, sa forme finale s'est creusée, après sa liaison sous pression avec le fond plus mou 1b. Fig. 1, l'insert 1a est limité en taille aux alentours de la partie centrale 3a du fond 3 ; voir également fig.3. Il demeure donc sensiblement dans sa forme d'origine, sans bord périphérique relevé. D'autres formes de bord que celui fig.5 sont possibles, tel un rebord (avec épaulement extérieur), ou un bord plus évasé.

Dans tous les cas, l'insert 1a est fixé par encastrement dans le fond plus mou, par l'intermédiaire d'orifices 7 qui le traversent de part en part et sont remplis étroitement par le métal mou de cette paroi de fond. Cet insert 1a, avec ces orifices, favorise la résistance à la déformation du fond.

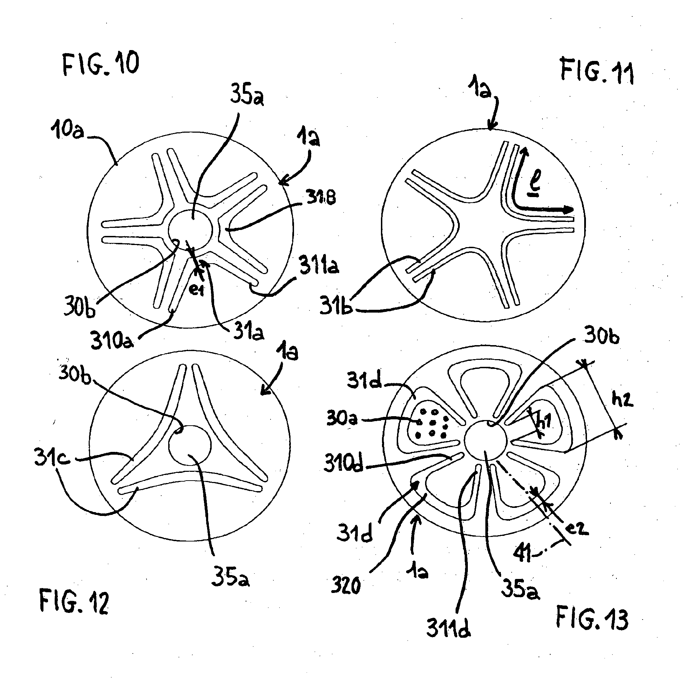

Comme on le comprend plus clairement au vu des figures 2,5 et 8, les orifices 7 pourront être d'une ou plusieurs natures. D'abord, ils comprendront des fentes allongées 31a, 31b... anti-déformation, de formes toutes identiques ou non. Ensuite, d'autres ouvertures pourront compléter en particulier la fixation par encastrement, tels les remplissages circulaires de petit diamètre 33a, et/ou le remplissage central de plus grand diamètre 35a (figs. 10, 12,13) à l'endroit des ouvertures correspondantes, ici circulaires, respectivement de petit et grand diamètres 30a, 30b traversant l'insert figs. 2 et 12.

Fig. 11, seules les fentes allongées 31b assurent la liaison insert-fond de la calotte.

Figs 7-9, une large partie centrale, ici discoïdale, est occupée par une zone en creux 37 de l'insert qui accroit la rigidité et la fixation par encastrement de cet insert et favorise la capacité de chauffage par induction puisqu'il n'y a pas là traversée du matériau mou de fond 1b et que l'insert, s'il est ferromagnétique, est sensible aux ondes magnétiques d'une bobine d'induction.

Quoi qu'il en soit, par souci de performance mécanique et pour tendre favorablement vers le/les compromis évoqué(s) plus haut, on conseille que, là où ils existent, ces orifices 7 soient à contour fermé, en particulier les fentes 31a, 31b, 31c....

Concernant ces fentes allongées 31a...31d, ici aspect essentiel de l'invention, elles définissent donc, sur leur longueur (marquée l figs.9,11) une forme globalement d'arche, avec des portions extrêmes opposées - telles 310d, 311d fig. 13 ou encore 310a, 311a fig.10 - qui sont toutes dirigées soit vers le centre de l'insert 1a (c'est-à-dire orientées en direction de lui), comme fig. 13, soit vers sa périphérie extérieure 10a (comme sur toutes les autres figures et notamment 1, 6 et 10).

Comme on l'a déjà indiqué, ces fentes allongées présentent exclusivement les deux portions extrêmes opposées précitées, telles 310a et 311a pour les fentes 31a, sans autres extrémités intermédiaires, à la différence des ramifications que l'on peut noter dans WO 2006/126848.

Suite à une campagne d'essais et pour atteindre le compromis cherché avec une performance mécanique élevée, on conseille que ces portions extrêmes opposées des fentes allongées (31a, 31b...) soient chacune sensiblement parallèles à une des portions extrêmes d'une fente adjacente, comme en 311a, 311a1 pour les fentes 31a, 31a1 fig.6 à titre d'exemple.

On aura compris que ce qu'on dénomme «portions extrêmes » d'une fente allongée est au moins la partie terminale de chaque branche latérale - telles 312,314 fig. 6 - d'une telle fente, voire toute cette branche. L'aspect « sensiblement parallèle » s'appréciera comme tendant vers ce parallélisme.

Sur les figures qui montrent le fond de dessous, on aura noté que les fentes allongées 31a,31b... sont disposées en étoile autour du centre de ladite pièce. Ceci est favorable à une bonne stabilité mécanique et à une répartition performante des zones de chauffage.

Pour ces raisons et pour favoriser le compromis visé, on conseille par ailleurs que les deux branches, ou parties, latérales des fentes soient rectilignes et réunies entre elles par une partie centrale rectiligne (316 fig.3) ou incurvée avec une convexité orientée vers la périphérie 10a dudit fond, comme donc ladite partie centrale 318 fig.6 ou 9 entre les branches 312,314, voir également partie centrale 320 fig.13. La solution « rectiligne » est en particulier conseillée pour les inserts discoïdaux de petit diamètre.

Pour la réalisation industrielle des fentes, deux ou trois voies sont conseillées pour tendre vers les objectifs ici visés.

D'abord, suivre la voie illustrée figs. 6, 9, 10 où :
- l'arche que forme chaque fente allongée, telle 31a, présente une partie centrale, telle 316 ou 318, située plus près du centre de l'insert 1a que ne le sont lesdites portions extrêmes, telles 310a, 311a,
- et ces fentes présentent de préférence une largeur plus importante vers leur partie centrale, voir largeur e1 fig. 10, que vers leurs portions extrêmes, telles 310a, 311a.

Sinon, réaliser les fentes, comme fig.13 où :
- l'arche ou le lobe (ventru) ou encore la forme en pétale que définit chaque fente 31d présente une partie centrale 320 située plus près de la périphérie extérieure de l'insert que ne le sont lesdites portions extrêmes, ici 310d, 311d,
- et ces fentes présentent alors une largeur e2 plus importante vers leur partie centrale que vers ces portions extrêmes.

La troisième solution [illustrée figs. 3, 11, 12] qui correspond à la première, à ceci près que la largeur des fentes allongées est constante sur sensiblement toute leur largeur, est a priori plutôt réservée aux inserts de petits diamètres. Des exceptions sont toutefois possibles.

Concernant notamment la forme des arches que définissent favorablement les fentes allongées pour une bonne stabilité mécanique du fond, y compris avec les forts gradients thermiques pouvant survenir, on aura compris que différents choix sont possibles.

Ainsi, fig. 12, on conseille une réalisation à, au moins, trois arches 31c d'égales longueurs à disposer centrée sur le fond, à la manière d'un triangle isocèle à côtés arqués convexes vers le centre et à sommets où les arches demeurent deux à deux disjointes.

Fig. 13, les arches sont disposées autour du centre, en définissant plusieurs pétales radiales 31d, ici cinq, chacune avec une convexité orientée vers la périphérie du fond 3.

Toujours fig. 13, les arches présentent individuellement une forme en U, avec deux parties latérales symétriques par rapport à l'axe radial considéré, tel 41 pour l'arche qu'il intersecte. L'écart, tel h1, entre les parties latérales du U, à leur extrémité libre qui est plus proche du centre que la partie centrale qui réunit ces parties latérales, est inférieur à la longueur h2 de cette partie centrale.

Au contraire, figs. 3, 6, 9, 10-12 les arches présentent individuellement une forme en U s'évasant en direction de la périphérie 10a du fond, avec deux parties (telles 312, 314 fig.6) symétriques par rapport à un axe radial, tel celui repéré 43 même figure.

Comme on l'a déjà indiqué plus avant dans la description, on remarquera figs. 3, 6 (mais ceci est applicable à d'autres géométries de fentes) que des ouvertures 30a, remplies par le premier matériau (« mou » 1b suivant un contour fermé non allongé ici circulaire et plus proches du centre du fond que les fentes (ici 31a) traversent l'insert 1a. Ceci est favorable aux objectifs visés, y compris l'anti-déformation.

L'est également le fait que, favorablement :
- si l'arche que forme chaque fente allongée présente une partie centrale située plus près du centre de la pièce que ne le sont lesdites portions extrêmes, comme sur tous les modes d'exemples de réalisation illustrés sauf fig.13,
- alors d'autres dites ouvertures (encore repérées 30a) remplies par le premier matériau mou et présentant de préférence un contour circulaire traversent l'insert 1a.

En particulier dans le cas de la fig. 13 où les parties centrales 320 des fentes définissent, ensemble, une forme annulaire discontinue près de la périphérie de l'insert 1a (mais l'application aux autres cas est possible), d'autres dites ouvertures (repérées 30a et figurées uniquement pour certaines) traversent l'insert. A nouveau ces ouvertures sont remplies par le matériau mou de fond, de préférence suivant un contour circulaire, et sont situées à l'intérieur de ladite forme globalement en arche que définit chaque fente allongée 31d.

Pour la fabrication des articles, on conseille de procéder comme suit :
D'abord, sans revenir sur le rivetage qui est possible, on peut en particulier recourir à une frappe (« stamping ») soit à froid (température ambiante), soit à chaud (en anglais « hot stamping »).

Pour le premier cas, on pourra partir d'un bloc de métal mou, tel l'aluminium précité, et, soit on conformera ce bloc pour obtenir une calotte (telle 11) avec encastrement conjoint de l'insert, soit on formera d'abord le fond 3 avec également encastrement de l'insert 1a, après quoi on déformera à nouveau le métal mou pour élever les parois latérales de la calotte.

D'éventuels compléments locaux, comme un disque de cuivre pourront être prévus, en particulier en périphérie du fond, vers son raccordement à la paroi latérale, de sorte que la calotte demeurera réalisée au moins essentiellement dans un/ledit matériau plus mou que celui de l'insert.

Dans le cas de la réalisation des figs.1-3, on est parti d'un insert 1a en métal dur se présentant ici comme un petit disque que l'on a centré sur le fond 3 plus mou. Une frappe à froid a créé l'encastrement de l'insert : tous les orifices 7 (fentes allongées 31a, ouvertures complémentaires 30a) sont alors remplis par le métal mou (remplissages 33a).

Dans le cas comparable de la réalisation des figs. 4-6, on a réalisé l'encastrement de l'insert 1a à partir d'une capsule à bord périphérique 12a relevé. Sous la pression du moule, avec à nouveau une « frappe à froid », la matière plus molle a flué dans les orifices 7 et le bord périphérique 12a s'est encastré dans ce métal jusqu'à ce qu'on obtienne la situation de la fig. 5 (avec éventuellement un bord 12a orienté différemment).

Dans le cas de la réalisation des figs.7-9, on a réalisé l'encastrement de l'insert 1a par frappe à chaud. La calotte 10b est ici en matériau dur, tel un acier inoxydable et a été préformée. Une couche 1b issu d'un bloc de matériau plus mou, tel de l'aluminium, à point de fusion inférieur à celui des matériaux du fond plein 3 de la calotte et de l'insert dur 1a (ici inox) est interposée entre ce fond 3 et l'insert 1a. La chaleur et la frappe ont provoqué d'une part le fluage du matériau plus mou qui a rempli les orifices 7 de l'insert et d'autre part le cintrage périphérique de cet insert, en particulier si on est parti d'un insert en forme de plaque. Une forme initiale en capsule est toutefois préférée, la frappe faisant coïncider les bords de l'insert et de la calotte, zone 45 fig.8, et faisant également remonter le métal mou dans cette zone pour la fixation intime entre l'insert, le bloc mou déformé 1b et le fond de la calotte.

Les inserts 1a avec leurs formes de fentes des figs. 10 à 13 sont compatibles avec l'une des techniques ci-dessus.

On notera que la section des orifices 7, et en particulier des trous 30a, ne sera pas nécessairement cylindrique. Ainsi, une section tronconique est par exemple envisageable.

## Revendications

1. Article culinaire comprenant un fond (1b, 3) doublé, par-dessous, par un insert (1a) en un matériau dur, des ouvertures (7) traversant ledit insert pour sa fixation avec le fond, certaines au moins d'entre elles se présentant comme des fentes allongées (31a, 31b, 31c, 31d) définissant individuellement, sur leur longueur, une forme globalement d'arche, **caractérisé en ce que** lesdites fentes (31a, 31b, 31c, 31d) présentent des portions extrêmes longitudinalement opposées (310a, 311a; 310d, 311d) qui sont toutes allongées suivant une direction s'étendant soit vers le centre de l'insert (1a), soit vers la périphérie extérieure de cet insert.

2. Article selon la revendication 1, **caractérisé en ce que** l'insert (1a) est discoïdal et lesdites portions extrêmes longitudinalement opposées s'y étendent sensiblement radialement.

3. Article selon l'une des revendication précédentes, **caractérisé en ce que** lesdites fentes allongées (31a, 31b, 31c...):
- présentent deux portions extrêmes opposées (310a, 311a, 310d, 311d), et donc deux extrémités, exclusivement et/ou
- sont à contour fermé.

4. Article selon l'une des revendications précédentes, **caractérisé en ce que** lesdites portions extrêmes opposées (310a, 311a, 310d, 311d) des fentes allongées sont chacune sensiblement parallèles à une desdites portions extrêmes d'une fente allongée adjacente.

5. Article selon l'une des revendications précédentes, **caractérisé en ce que** les portions extrêmes (310a, 311a, 310d, 311d) des fentes allongées appartiennent à deux parties latérales rectilignes réunies entre elles par une partie centrale également rectiligne ou incurvée avec une convexité orientée vers la périphérie (10a) dudit fond.

6. Article selon l'une des revendications précédentes, **caractérisé en ce que** :
- ladite arche que forme chaque fente allongée (31d) présente une partie centrale située plus près de la périphérie extérieure de l'insert que ne le sont lesdites portions extrêmes (310a, 311a, 310d, 311d),
- et de préférence ces fentes allongées présentent une largeur plus importante vers leur dite partie centrale que vers leurs dites portions extrêmes.

7. Article selon l'une des revendications 1 à 4, **caractérisé en ce que** :
- ladite arche que forme chaque fente (31a,31b, 31c) présente une partie centrale située plus près du centre de l'insert (1a) que ne le sont lesdites portions extrêmes,
- et ces fentes présentent de préférence une largeur plus importante vers leur dite partie centrale que vers leurs dites portions extrêmes.

8. Article selon l'une des revendications 1 à 4, **caractérisé en ce qu'**il comprend trois dites arches (31c) d'égales longueurs disposées centrée sur ledit fond, à la manière d'un triangle isocèle à côtés arqués convexes vers le centre et à sommets où lesdites arches demeurent deux à deux disjointes.

9. Article selon l'une des revendications 1 à 4, **caractérisé en ce que** les arches sont disposées autour du centre, en définissant plusieurs pétales radiales (31d) chacune avec une convexité orientée vers la périphérie (10a) dudit fond,

10. Article selon la revendication 9, **caractérisé en ce que** les arches (31d), qui sont donc distinctes les unes des autres, présentent individuellement une forme en U, avec deux parties symétriques par rapport à un axe radial (41), l'écart (h1) entre les parties latérales du U, à leur extrémité libre qui est plus proche du centre que la partie centrale qui réunit ces parties latérales, étant inférieur à la longueur (h2) de ladite partie centrale.

11. Article selon l'une des revendications 1 à 4, **caractérisé en ce que** les arches présentent individuellement une forme en U s'évasant en direction de la périphérie (10a) du fond, avec deux parties symétriques par rapport à un axe radial (41, 43).

12. Article selon l'une des revendications précédentes, **caractérisé en ce que** d'autres ouvertures (30a), ayant un contour sensiblement circulaire et plus proches du centre du fond que les fentes allongées (31a, 31b...) traversent l'insert (1a).

13. Article selon la revendication 4, **caractérisé en ce que** :
- ladite arche qui forme chaque fente allongée (31a,31b,31c) présente une partie centrale située plus près du centre de l'insert que ne le sont lesdites portions extrêmes, et
- d'autres ouvertures (30a), ayant un contour sensiblement circulaire traversent ledit insert.

14. Article selon l'une des revendications 1 à 10, **caractérisé en ce que** d'autres ouvertures (30a), ayant un contour sensiblement circulaire et situées dans l'intérieur que dessine ladite forme globalement d'arche définie par chaque fente allongée (31a, 31b...) traversent ledit insert.

15. Article selon l'une des revendications précédentes, **caractérisé en ce que** ledit fond (1b, 3) appartient à une calotte (11) réalisée au moins essentiellement dans un premier matériau plus mou que celui de l'insert (1a) et cet insert est, par ses ouvertures (30), y compris les fentes allongées (31a, 31b, 31c), qui le traversent, encastré dans ledit premier matériau, de sorte que dans le fond (1b, 3) on ne trouve que deux couches (1a, 1b) encastrées l'une dans l'autre.

16. Article selon l'une des revendications 1 à 14, **caractérisé en ce que** le fond (1b, 3) comprend une couche (1b) dans un matériau plus mou que celui de l'insert (1a), cette couche étant interposée entre :
- l'insert (1a) qui est, par ces ouvertures (7) qui le traversent, y compris les fentes allongées (31a, 31b, 31c), encastré dans ce premier matériau,
- et une paroi de fond (3) d'une calotte (10b) en un matériau plus dur que celui de ladite couche (1b).

## Patentansprüche

1. Kochgeschirr, umfassend einen Boden (1b, 3), der von unten durch einen Einsatz (1a) aus einem harten Material verdoppelt ist, und Öffnungen (7), die den Einsatz durchqueren, um ihn am Boden zu befestigen, wobei mindestens bestimmte von ihnen als langgestreckte Schlitze (31a, 31b, 31c, 31d) vorliegen, die einzeln über ihre Länge hinweg eine allgemein bogenförmige Form definieren, **dadurch gekennzeichnet, dass** die Schlitze (31a, 31b, 31c, 31d) sich in Längsrichtung gegenüberliegende Endabschnitte (310a, 311a; 310d, 311d) aufweisen, die alle in einer Richtung gestreckt sind, die entweder zur Mitte des Einsatzes (1a) oder zum äußeren Umfang dieses Einsatzes hin verläuft.

2. Geschirr nach Anspruch 1, **dadurch gekennzeichnet, dass** der Einsatz (1a) scheibenförmig ist und sich die in Längsrichtung gegenüberliegenden Endabschnitte dort im Wesentlichen radial erstrecken.

3. Geschirr nach einem der vorhergehenden Ansprüche, **dadurch gekennzeichnet, dass** die langgestreckten Schlitze (31a, 31b, 31c ...):
- zwei gegenüberliegende Endabschnitte (310a, 311a, 310d, 311d) und somit zwei Enden aufweisen und/oder ausschließlich
- eine geschlossene Kontur haben.

4. Geschirr nach einem der vorhergehenden Ansprüche, **dadurch gekennzeichnet, dass** die sich in Längsrichtung gegenüberliegenden Endabschnitte (310a, 311a, 310d, 311d) der langgestreckten Schlitze jeweils im Wesentlichen parallel zu einem der Endabschnitte eines benachbarten langgestreckten Schlitzes verlaufen.

5. Geschirr nach einem der vorhergehenden Ansprüche, **dadurch gekennzeichnet, dass** die Endabschnitte (310a, 311a, 310d, 311d) der langgestreckten Schlitze zu zwei geradlinigen Seitenteilen gehören, die durch einen ebenfalls geradlinigen oder gekrümmten Mittellteil mit einer Konvexität miteinander verbunden sind, die zum Umfang (10a) des Bodens ausgerichtet ist.

6. Geschirr nach einem der vorhergehenden Ansprüche, **dadurch gekennzeichnet, dass**
- der Bogen, den jeder langgestreckte Schlitz (31d) bildet, einen Mittelteil aufweist, der dem äußeren Umfang des Einsatzes näher liegt als die Endabschnitte (310a, 311a, 310d, 311d),
- und diese langgestreckten Schlitze vorzugsweise zu ihrem Mittelteil hin breiter sind als zu ihren Endabschnitten hin.

7. Geschirr nach einem der Ansprüche 1 bis 4, **dadurch gekennzeichnet, dass**
- der Bogen, den jeder Schlitz (31a, 31b, 31c) bildet, einen Mittelteil aufweist, der der Mitte des Einsatzes (1a) näher liegt als die Endabschnitte,
- und diese Schlitze vorzugsweise zu ihrem Mittelteil hin breiter sind als zu ihren Endabschnitten hin.

8. Geschirr nach einem der Ansprüche 1 bis 4, **dadurch gekennzeichnet, dass** es drei Bögen (31c) mit gleicher Länge umfasst, die nach der Art eines gleichschenkligen Dreiecks mit konvexen zur Mitte verlaufenden bogenförmigen Seiten und mit Spitzen, an denen die Bögen paarweise getrennt bleiben, mittig auf dem Boden angeordnet sind.

9. Geschirr nach einem der Ansprüche 1 bis 4, **dadurch gekennzeichnet, dass** die Bögen um die Mitte herum angeordnet sind, indem sie mehrere radiale Petalen (31d) bilden, die jeweils eine zum Umfang (10a) des Bodens hin ausgerichtete Konvexität haben.

10. Geschirr nach Anspruch 9, **dadurch gekennzeichnet, dass** die Bögen (31d), die somit voneinander separat sind, einzeln U-förmig mit zwei zu einer radialen Achse (41) symmetrischen Teilen sind, wobei der Abstand (h1) zwischen den Seitenteilen des U an ihrem freien Ende, das der Mitte näher liegt als der Mittelteil, der diese Seitenteile verbindet, kleiner als die Länge (h2) des Mittelteils ist.

11. Geschirr nach einem der Ansprüche 1 bis 4, **dadurch gekennzeichnet, dass** die Bögen einzeln eine U-Form aufweisen, die sich in Richtung des Umfangs (10a) des Bodens aufweitet und zwei zu einer radialen Achse (41, 43) symmetrische Teile hat.

12. Geschirr nach einem der vorhergehenden Ansprüche, **dadurch gekennzeichnet, dass** andere Öffnungen (30a), die eine im Wesentlichen kreisförmige Kontur haben und der Mitte des Bodens näher liegen als die langgestreckten Schlitze (31a, 31b ...), den Einsatz (1a) durchqueren.

13. Geschirr nach Anspruch 4, **dadurch gekennzeichnet, dass**
- der Bogen, den jeder langgestreckte Schlitz (31a, 31b, 31c) bildet, einen Mittelteil aufweist, der der Mitte des Einsatzes näher liegt als die Endabschnitte, und
- andere Öffnungen (30a), die eine im Wesentlichen kreisförmige Kontur haben, den Einsatz durchqueren.

14. Geschirr nach einem der Ansprüche 1 bis 10, **dadurch gekennzeichnet, dass** andere Öffnungen (30a), die eine im Wesentlichen kreisförmige Kontur haben und im Inneren angeordnet sind, das durch die allgemein bogenförmige Form gebildet wird, die durch jeden langgestreckten Schlitz (31a, 31b ...) definiert wird, den Einsatz durchqueren.

15. Geschirr nach einem der vorhergehenden Ansprüche, **dadurch gekennzeichnet, dass** der Boden (1b, 3) zu einer Kalotte (11) gehört, die mindestens im Wesentlichen aus einem ersten Material hergestellt ist, das weicher als das des Einsatzes (1a) ist und der Einsatz durch seine Öffnungen (30), einschließlich der langgestreckten Schlitze (31a, 31b, 31c), die ihn durchqueren, im ersten Material eingelagert ist, so dass sich im Boden (1b, 3) nur zwei ineinander eingelagerte Schichten (1a, 1b) befinden.

16. Geschirr nach einem der Ansprüche 1 bis 14, **dadurch gekennzeichnet, dass** der Boden (1b, 3) eine Schicht (1b) aus einem Material umfasst, das weicher als das des Einsatzes (1a) ist, wobei diese Schicht zwischen
dem Einsatz (1a), der durch diese Öffnungen (7), die ihn durchqueren, einschließlich der langgestreckten Schlitze (31a, 31b, 31c), in diesem ersten Material eingelagert ist,
- und einer Bodenwand (3) einer Kalotte (10b) aus einem Material, das härter als das der Schicht (1b) ist,
liegt.

## Claims

1. Cooking utensil comprising a base (1b, 3) lined underneath by an insert (1a) in a hard material, openings (7) passing through said insert for fastening it with the base, at least some of the openings being in the form of elongated slots (31a, 31b, 31c, 31d) individually defining a substantially arched shape over their length, **characterized in that** the said slots (31a, 31b, 31c, 31d) have longitudinally opposite end portions (310a, 311a; 310d, 311d) which are all elongated in a direction extending either towards the centre of the insert (1a) or towards the outer periphery of this insert.

2. Utensil according to Claim 1, **characterized in that** the insert (1a) is discoidal and said longitudinally end portions extend substantially radially there.

3. Utensil according to either of the preceding claims, **characterized in that** said elongated slots (31a, 31b, 31c ...);
- have two opposite end portions (310a, 311a, 310d, 311d), and therefore two ends, exclusively and/or
- have a closed contour.

4. Utensil according to one of the preceding claims, **characterized in that** said opposite end portions (310a, 311a, 310d, 311d) of the elongated slots are each substantially parallel to one of said end portions of an adjacent elongated slot.

5. Utensil according to one of the preceding claims, **characterized in that** the end portions (310a, 311a, 310d, 311d) of the elongated slots belong to two rectilinear lateral parts joined together by a central part which is likewise rectilinear or curved with a convexity oriented towards the periphery (10a) of said base.

6. Utensil according to one of the preceding claims, **characterized in that**:
- the said arch formed by each elongated slot (31d) has a central part situated closer to the outer periphery of the insert than are the said end portions (310a, 311a, 310d, 311d),
- and preferably these elongated slots have a larger width towards their said central part than towards their said end portions.

7. Utensil according to one of Claims 1 to 4, **characterized in that**:
- the said arch formed by each slot (31a, 31b, 31c) has a central part situated closer to the centre of the insert (1a) than are the said end portions,
- and these slots preferably have a larger width towards their said central part than towards their said end portions.

8. Utensil according to one of Claims 1 to 4, **characterized in that** it comprises three said arches (31c) of equal lengths arranged centred on said base, in the manner of an isosceles triangle with convex arched sides towards the centre and with apexes where said arches remain disjointed in pairs.

9. Utensil according to one of Claims 1 to 4, **characterized in that** the arches are arranged around the centre while defining a plurality of radial petals (31d) each with a convexity oriented towards the periphery (10a) of said base.

10. Utensil according to Claim 9, **characterized in that** the arches (31d), which are therefore distinct from each other, individually have a U shape with two symmetrical parts with respect to a radial axis (41), the distance (h1) between the lateral parts of the U, at their free end which is closer to the centre than the central part which joins these lateral parts, being smaller than the length (h2) of said central part.

11. Utensil according to one of Claims 1 to 4, **characterized in that** the arches individually have a U shape flared in the direction of the periphery (10a) of the base, with two symmetrical parts with respect to a radial axis (41, 43).

12. Utensil according to one of the preceding claims, **characterized in that** other openings (30a), having a substantially circular contour and closer to the centre of the base than the elongated slots (31a, 31b ...), pass through the insert (1a).

13. Utensil according to Claim 4, **characterized in that**:
- said arch formed by each elongated slot (31a, 31b, 31c) has a central part situated closer to the centre of the insert than are said end portions, and
- other openings (30a), having a substantially circular contour, pass through said insert.

14. Utensil according to one of Claims 1 to 10, **characterized in that** other openings (30a), having a substantially circular contour and situated in the interior formed by said substantially arched shape defined by each elongated slot (31a, 31b ...), pass through the said insert.

15. Utensil according to one of the preceding claims, **characterized in that** said base (1b, 3) belongs to a cap (11) made at least essentially from a first material which is softer than that of the insert (1a) and this insert is, via its openings (30) including the elongated slots (31a, 31b, 31c), which pass through it, embedded in said first material such that only two layers (1a, 1b) embedded in one another are found in the base (1b, 3).

16. Utensil according to one of Claims 1 to 14, **characterized in that** the base (1b, 3) comprises a layer (1b) in a material which is softer than that of the insert (1a), this layer being interposed between:
- the insert (1a) which is, via these openings (7) which pass through it, including the elongated slots (31a, 31b, 31c), embedded in this first material,
- and a base wall (3) of a cap (10b) from a material which is harder than that of said layer (1b).
